# EUROPÄISCHE PATENTANMELDUNG

(11) **EP 3 960 665 A1**
(43) Veröffentlichungstag der Anmeldung: **02.03.2022**
(21) Anmeldenummer: 20193378.5
(22) Anmeldetag: 28.08.2020
(51) Int. Cl.: B65G 43/02, G01L 5/04

(54) **VERFAHREN UND SYSTEM ZUM ERKENNEN VON ANOMALIEN BEIM BETRIEB EINES FÖRDERSYSTEMS, INSBESONDERE EINES FLUGHAFEN-GEPÄCKKARUSSELLS**

(71) Anmelder: Siemens Aktiengesellschaft, 80333 München (DE)
(72) Erfinder: KÖNIG, Frank, 33734 Dubai (AE); MUECK, Dr. Bengt, 90429 Nürnberg (DE)
(74) Vertreter: Siemens Patent Attorneys

(57) **Zusammenfassung**

Flughafen-Gepäckkarussells werden meist in einem notwendigerweise zu Ausfällen führenden Run-to-Failure-Approach betrieben. Die Erfindung offenbart ein Verfahren und ein System zum Erkennen von Anomalien beim Betrieb eines Fördersystems, umfassend eine umlaufende Antriebskette (4), eine Antriebseinheit und eine Förderstrecke. Die Antriebskette (4) dient zur Kraft- und Bewegungsübertragung von einer Antriebseinheit auf eine Förderstrecke und umfasst Kettenglieder (6) und diese verbindende Pins (8'). Mindestens einer der Pins (8') ist ein Kraftmesspin (8), der bei einem Bewegen der Antriebskette (4) die auf ihn wirkenden Kräfte registriert. Die registrierten Kräfte werden von dem Kraftmesspin (8) zusammen mit einem Zeitstempel und/oder einem Ortsstempel und einer Identität des Kraftmesspins (8) drahtlos an das Hintergrundsystem übermittelt. Im Hintergrundsystem werden die übermittelten Daten einer Analyse unterzogen und bei Abweichungen als Anomalie erkannt und mit einer Meldung signalisiert. Eine Auswertung der Messergebnisse erlaubt eine zielgerichtete Ableitung von Wartungsmaßnahmen.

## Beschreibung

Die vorliegende Erfindung betrifft das technische Gebiet der Fördersysteme zum Transport von Stückgütern, insbesondere Fördersystemen innerhalb eines Flughafens für Gepäckstücke und Stückgüter.

Ein Ziel eines jeden Flughafenbetreibers ist es, Ausfälle bei der Gepäckabfertigung auf ein Minimum zu reduzieren. In der Praxis bedeutet dies, dass Gepäckfördersysteme während des Betriebs "am Leben" gehalten werden und eine zeitbasierte Wartung ausserhalb der Betriebszeiten durchgeführt wird. «Supervisory Control and Data Acquisition» Systeme, im folgenden SCADA-Systeme genannt, überwachen und steuern technische Prozesse mittels eines Computer-Systems und kommen häufig bei der Überwachung von Flughafen-Gepäckfördersystemen zur Anwendung. SCADA ermöglicht Flughafen- und anderen System-Betreibern, die Betriebszustände von ganzen Systemen zu überwachen.

Ein SCADA-System kann Ausfälle von Abschnitten eines Fördersystems anzeigen, beispielsweise wenn diese Abschnitte nicht mehr für die Gepäckabfertigung verfügbar sind. Kleinere Probleme, wie Störungen im Materialfluss, beispielsweise verursacht durch verkeilte Gepäckstücke, können sehr rasch behoben werden, so dass der betreffende Abschnitt in den normalen Betriebszustand zurückkehren kann. Komponentenausfälle, die durch Verschleiß verursacht werden, können jedoch meist nicht ohne signifikante Auswirkungen auf die Verfügbarkeit und Kapazität des Systems behoben werden. Diese Ausfälle können für den Flughafen- und die anderen System-Betreiber zu großen Problemen führen.

Um Ausfälle auf ein Minimum zu reduzieren können Gepäckfördersysteme mit einer sogenannten «präventiven Wartung», welche das präventive Warten von Komponenten in vorherbestimmten Wartungsintervallen beinhaltet, kontrolliert werden. Diese zeitbasierte Wartungsstrategie ist jedoch aufwendig. Darüber hinaus erfolgen Wartungsaktivitäten an einzelnen Komponenten, die eigentlich noch gar nicht nötig wären. Dazu kommt, dass die Abnutzung einzelner, identischer Komponenten nicht gleichmäßig ist, so dass einige Komponenten zu häufig, andere Komponenten zu spät gewartet werden und es somit trotz regelmäßiger Wartungsintervalle dennoch zu Ausfällen kommt. Aufgrund der enormen Länge von Fördersystemen in Flughäfen ist eine genauere Inspektion sehr aufwendig und zeitintensiv, zudem sind nicht alle Teile einsehbar, wodurch die Wartung erschwert wird und Ausfälle somit trotz zeit- und kostenintensiver nicht vollständig verhindert werden können. Daher ist in einigen Fördersystemen eine Wartung aller Komponenten im Mittel teurer als der durch einen Ausfall verursachte Schaden.

Daher werden zeitbasierte oder vorbeugende Wartungsprogramme zunehmend durch ein Programm zur korrektiven Wartung ersetzt, bekannt als Run-to-Failure RTF oder reaktive Wartung. Diese reaktive Wartung führt zu ausgefallenen Komponenten, die während des laufenden Betriebs repariert oder ersetzt werden müssen, was zu Systemausfallzeiten und zu Vertragsstrafen für verspätet gelieferte Gepäckstücke führen kann. Diese Vertragsstrafen sind von den Flughafenbetreibern an die Fluggesellschaften zu entrichten. Daneben entstehen hohe Kosten für die Reparatur oder den Ersatz wegen des plötzlichen Versagens, nicht zuletzt deshalb, weil das Wartungspersonal ähnlich wie eine Feuerwehr sofort einsatzbereit sein muss.

Ein Flughäfen-Gepäckausgabekarussell (reclaim carussel) gibt den ankommenden Passagieren ihr aufgegebenes Gepäck zurück. Das Gepäck wird dem Gepäckausgabekarussell in der Regel über Zuführbänder von ober- oder unterhalb zugeführt und dann auf ein sich bewegendes umlaufendes Förderband (reclaim belt) verteilt. Es ist üblich, dass diese Art von System zwei Zuführbänder hat, wodurch die Zuführkapazität erhöht wird, mit der das Gepäck an das umlaufende Förderband und somit an die Passagiere geliefert wird. Das umlaufende Förderband eines Gepäckausgabekarussells besteht typischerweise aus einem reibungsbetriebenen Förderband, das mit modularen Einheiten zu einer Endlosschleife zusammengebaut wird. Bewegt wird das umlaufende Förderband typischerweise von einer von mindestens einer Antriebseinheit angetriebenen Antriebskette.

Aus Redundanzgründen werden Gepäckausgabekarussells typischerweise von zwei Antriebseinheiten angetrieben, die über eine frei spinnende Kupplung (Fahrradprinzip) verbunden sind. Eine einzelne Antriebseinheit ist so dimensioniert, dass sie ein Förderband mit einer Länge von bis zu 75m längs der geschlossenen Umlaufbahn antreiben kann. Typischerweise sind Gummilamellen des Förderbands 1200mm lang und 8mm dick. Ein gepresster Stahllamellenträger bzw. Fahrwerk ist an jedem Kettenglied im Abstand von 250mm angebracht und trägt Polyurethan-bereifte Stützräder und ein Führungsrad für einen ruhigen, reibungslosen Betrieb. Gummilamellen und Stützpuffer sind an jedem Träger angebracht, um eine kontinuierliche Tragfläche zu schaffen.

Gepäckausgabekarussells befinden sich in der Ankunftshalle und ihre Verschleißteile wie Rollen und Schienen sind hinter einer Verkleidung verborgen. Für eine vorbeugende Wartung ist der Zugang, und insbesondere auch durch die hohe Anzahl der zu inspizierenden Teile, zeitaufwendig und arbeitsintensiv.

Gepäckausgabekarussells arbeiten wie Förderbänder auf einer geschlossenen Umlaufbahn von bis zu mehreren hundert Meter Länge. Gepäckausgabekarussells enthalten zwei Schienen und etwa jeden halben Meter rollt eine Polyurethan-Walze als Transportrolle auf je einer Schiene. Ein großer Flughafen betreibt bis 100 oder noch mehr solcher Gepäckausgabekarussells. Im Vergleich zu anderen für die Gepäckabfertigung verwendeten Komponenten sind Gepäckausgabekarussells im Betrieb sehr zuverlässig. Daher werden sie aus Kosten-Nutzen-Überlegungen meist gar nicht gewartet, sondern so lange betrieben, bis sich im laufenden Betrieb sich ein Ausfall ereignet.

Ein abrasiver Verschleiß tritt dann auf, wenn ein fester Gegenstand, dessen Material die gleiche oder eine noch größere Härte aufweist als das Material der Transportrollen oder der Schienen. Adhäsiver Verschleiß tritt durch Reibungswirkung zwischen Oberflächen von Übergangsstellen auf. Wenn diese Übergangsstellen unterschiedliche harte Materialien aufweisen, unterliegt das weichere Material einer Scherung und wird als Folge auf das härtere Material übertragen.

Der Verschleiß an den Schienen wird durch Ablagerungen verursacht, die auf einen Abrieb mit hoher Belastung zurückzuführen sind. Abrasiver Verschleiß tritt insbesondere dann auf, wenn abrasive Partikel während der Abnutzung zusätzlich gebrochen werden. Außerdem werden Transportrollen, die durch ein Objekt blockiert werden, verschlissen. Blockierte, also nicht bestimmungsgemäß rollende Transportrollen sind einer starken Reibung und damit einhergehend hohen Temperaturen ausgesetzt und verlieren so Material. Eingesetzte Antriebsketten werden hierbei ebenfalls erhöhten Belastungen ausgesetzt. Der Verschleiß ist umso geringer, umso schneller Störungen erkannt und behoben werden.

Es ist daher wichtig, drohende Ausfälle von Komponenten des Fördersystems so früh zu erkennen, damit ein Betriebsausfall des Fördersystems während der Betriebszeit noch verhindert werden kann und die Reparatur unmittelbar beim Beginn einer Betriebspause durchgeführt werden kann. Eine solche Instandhaltungsstrategie wäre für Flughafen- und Systembetreiber besonders wichtig, ist jedoch bis heute noch nicht auf dem Markt verfügbar.

Auch Förderstrecken von andere Fördersystem werden häufig von Antriebsketten angetrieben. Auf Gepäckkarussells werden Gepäckstücke auf Lamellen aufliegend befördert. Diese werden von einer Antriebskette im Gepäckkarussell gezogen. Die Antriebskette wiederum wird von einer oder mehreren Antriebseinheiten angetrieben, die Antriebseinheit(en) und die Antriebskette werden von einem Kettengetriebe umfasst.

Für den korrekten Betrieb des Gepäckförderkarussells muss die Antriebskette auf eine korrekte Spannung eingestellt werden. Eine Überspannung führt zu erhöhten Kräften. Eine zu niedrige Spannung zu einem unpräzisen Lauf. Beides kann Ursache für einen unnötigen Verschleiß sein.

Während des Betriebs können u.a. folgende Probleme auftreten. Ein herunterfallendes Störteil kann Rollen des Fördersystems blockieren oder sich zwischen den Lamellen oder anderen Teilen verfangen. Der Verschleiß steigt und insbesondere wenn ein Störteil entlang der Förderstrecke mitgeschleift wird, kann es zu Beschädigungen, insbesondere der Laufflächen kommen. Die Lamellen können sich, insbesondere bei Überladung wie sie bei Gepäckkarussells häufig vorkommen, verklemmen. Dies kann zu einer Materialermüdung und sogar zu einem Bruch der Antriebskette führen. Sind hier Personen in der Nähe besteht Verletzungsgefahr. Und sind mehrere Antriebseinheiten am Vortrieb einer Antriebskette beteiligt, kann die eingebrachte Leistung ungleichmäßig verteilt sein. So kann sowohl die Antriebskette als auch die stärker arbeitende Antriebsstation überlastet werden. Dies kann beispielsweise bei einem Antriebsriemenverschleiß einer Antriebseinheit passieren.

Stand der Technik ist die Überprüfung der Kettenspannung nach der Installation eines Fördersystems und während regelmäßiger Wartungsintervalle. Die Überprüfung der Kettenspannung kann mit einer Federwaage erfolgen. Es wird an einzelnen Punkten an einem stehenden Karussell kontrolliert. Dynamische Zusatzbelastungen (z.B. blockierte Rollen) werden nicht ermittelt. Es findet keine dynamische Messung während des Betriebs findet statt. Verschleiß wird manuell während der Inspektion gesucht, nachdem er bereits entstanden ist und evtl. bereits zu Beschädigungen geführt hat. Um blockierte Räder zu finden, muss das ganze Förderkarussell geöffnet werden. Dies wird nicht zu jeder Wartung gemacht. Während des Betriebs auftretender Verschleiß, Sicherheitsrisiken und andere Probleme werden toleriert.

Die bisherigen Methoden zur Messung der Kettenspannung finden statisch nach der Installation oder während der Wartung statt. Die Kräfte während des Betriebes werden nicht ermittelt.

Es existieren Kraftmesspins zur Erkennung von Überlast in quasi-statischen Anwendungen, beispielsweise bei einem Kran. Bei diesen Anwendungen wird jedoch erst eine Überlast oder eine Last nahe der Überlast registriert und angezeigt. Eine dynamische Kraftmessung findet nicht statt.

Fördersystem-Anomalien werden so häufig erst entdeckt, nachdem sie bereits zu übermäßigem Verschleiß, Beschädigungen und/oder Ausfällen geführt haben.

Der vorliegenden Erfindung liegt daher die Aufgabe zugrunde, die Nachteile des Stands der Technik zu beheben. Diese Aufgabe wird durch ein Verfahren und ein System mit den Merkmalen der Hauptansprüche. Vorteilhafte Ausgestaltungen der Erfindung ergeben sich aus den Unteransprüchen.

Hinsichtlich eines Verfahrens wird die vorstehend genannte Aufgabe gelöst durch ein Verfahren zum Erkennen von Anomalien beim Betrieb eines Fördersystems zum Transport von Stückgütern, beispielsweise Gepäckstücken, umfassend eine umlaufende Antriebskette, eine Antriebseinheit und eine Förderstrecke, wobei die Antriebskette zur Kraft- und Bewegungsübertragung von einer Antriebseinheit auf eine Förderstrecke dient und die Antriebskette Kettenglieder und diese verbindende Pins umfasst, wobei mindestens einer der Pins ein Kraftmesspin ist, ausgestaltet zum kontaktlosen Übertragen der auf ihn wirkenden Kräfte an ein Hintergrundsystem. Das Verfahren weist die Verfahrensschritte auf:
a) Bei einem Bewegen der Antriebskette registriert der Kraftmesspin die auf ihn wirkenden Kräfte.
b) Die registrierten Kräfte werden von dem Kraftmesspin zusammen mit einem Zeitstempel und/oder einem Ortsstempel und einer Identität des Kraftmesspins drahtlos an das Hintergrundsystem übermittelt.
c) Im Hintergrundsystem werden die im Verfahrensschritt b) übermittelten Daten einer Analyse unterzogen und bei Abweichungen als Anomalie (A) erkannt und mit einer Meldung signalisiert.

Da Umlaufgeschwindigkeit und Anfangsposition des Kraftmesspins bekannt sind, ist ein Zeitstempel im Wesentlichen gleichbedeutend mit einem Ortsstempel, da sie durch einfache Rechenoperationen ineinander überführt werden können.

Unter einem Kraftmesspin soll jegliche Vorrichtung verstanden werden, die in der Lage ist, die auf sie wirkenden Kräfte zu messen - mono- oder multidirektional -, also zu registrieren und an das Hintergrundsystem zu übermitteln. Ein Kraftmesspin verbindet ebenso wie ein normaler Pin zwei Kettenglieder.

Die erfindungsgemäße Lösung kann einen Verschleiß an Komponenten des Fördersystems vor Eintritt eines Systemausfalls erkennen und Wartungsarbeiten können noch rechtzeitig gestartet werden. Auch bei einem bereits eingetretenen Systemausfall kann nachträglich der Ort der Störung anhand der registrierten Kräfte erkannt werden. Die erfindungsgemäße Lösung eignet sich insbesondere für Fördersysteme, bei denen die Antriebsketten verborgen sind und nur durch Öffnen von Abdeckungen inspiziert und repariert werden können. Während Verschleiß in einem späteren Stadium auch bei statischer Inspektion erkannt werden kann, kann eine Überlast nur während des Betriebs, also bei einer dynamischen Messung, erkannt werden. Daher eignet sich die erfindungsgemäße Lösung besonders gut für Logistik-Fördersysteme mit unterschiedlich schweren Stückgütern und ohne Abstandserfordernisse, beispielsweise Flughafen-Gepäckkarussells. Die erfindungsgemäße Lösung kann überall dort, wo eine Antriebskette etwas bewegt bzw. antreibt, zur Anwendung kommen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform können die Abweichungen durch einen statistischen Vergleich mit vorangehenden Registrierungen oder durch einen Vergleich mit einer fixen Größe erkannt werden. Ein Vergleich mit einer fixen Größe benötigt typischerweise eine Kalibration anhand derer ermittelt wird, wie groß die auf die Antriebskette wirkenden Kräfte beim Bewegen der Antriebskette - mit bzw. Belastung der Förderstrecke - bei fehlerfreiem Betrieb sind. Bei einem Vergleich mit vorangehenden Registrierungen dienen die vorherigen Messungen als Referenzwerte.

Um eine instantane Auswertung zu ermöglichen, so dass eine Störung des Fördersystems gleich zu Beginn erkannt wird und Folgeschäden durch die Störung (Beschädigungen durch mitgeschleifte Teile, verstärkte Abnutzung, o.ä.) zu minimieren, kann gemäß einer weiteren Ausführungsform der Kraftmesspin die auf ihn wirkenden Kräfte analog oder mit hoher Abtastrate kontinuierlich oder nahezu kontinuierlich registrieren.

Gemäß einer Ausführungsform kann der Kraftmesspin batteriebetrieben sein oder über eine Verkabelung mit Strom versorgt werden. Für ein Flughafen- Gepäckkarussell bietet sich insbesondere ein Batteriebetrieb an, für einen Sorter insbesondere eine verkabelte Lösung.

Gemäß einer Ausführungsform kann der Kraftmesspin eine Welle umfassen, die eine Wheatstone-Brücke zur Messung einer Scherverformung aufweist. Die Wheatstone-Brücke misst eine doppelte Scherverformung mit hoher Genauigkeit und hoher Reproduzierbarkeit. Auch eine nur eine einzige Scherspannung messende Ausgestaltung des Kraftmesspins ist möglich, allerdings mit geringerer Genauigkeit in der Messung der Kräfte, die jedoch je nach Anwendung bereits ausreichend sein kann.

Gemäß einer Ausführungsform können zusätzlich zu den registrierten Kräften Zustandsdaten eines jeden Kraftmesspins, beispielsweise eine verbleibende Batteriekapazität und seine Temperatur, übermittelt werden. Gemäß einer weiteren Ausführungsform kann bei Unterschreiten einer festgelegten Batteriekapazität oder bei Überschreiten einer bestimmten Temperatur ebenfalls eine Meldung gemäß Anspruch 1, Verfahrensschritt c) abgesetzt werden. So kann die Batterie getauscht oder aufgeladen werden, bevor sie leer ist (z.B. während einer ohnehin durchgeführten Wartung) und falls die Kraftmessung von Zustandsdaten abhängig ist, eine höhere Messgenauigkeit erzielt werden. Dadurch ist auch eine Überwachung der Kraftmesspins selbst sichergestellt und Wartungsaufwendungen werden dadurch noch einmal mehr reduziert.

Gemäß einer Ausführungsform kann die Übermittlung der Daten von dem Kraftmesspin zum Hintergrundsystem über ein Gateway erfolgen, wobei das Gateway an einem festen Ort des Fördersystems installiert ist und bei jeder maximalen Annäherung des Kraftmesspins eine Nullzeit gesetzt wird.

Hinsichtlich einer Vorrichtung wird die vorstehend genannte Aufgabe gelöst durch ein System zum Erkennen von Anomalien beim Betrieb eines Fördersystems zum Transport von Stückgütern, beispielsweise Gepäckstücken, umfassend eine umlaufende Antriebskette, eine Antriebseinheit und eine Förderstrecke. Die Antriebskette dient zur Kraft- und Bewegungsübertragung von einer Antriebseinheit auf eine Förderstrecke und die Antriebskette umfasst Kettenglieder und diese verbindende Pins, wobei mindestens einer der Pins ein Kraftmesspin ist, ausgestaltet zum kontaktlosen Übertragen der auf ihn wirkenden Kräfte an ein Hintergrundsystem. Die Vorrichtung umfasst Mittel, insbesondere ein Hintergrundsystem, zur Durchführung des Verfahrens von Anspruch 1 bis 8, insbesondere der Verfahrensschritte a) bis c) von Anspruch 1.

Das System weist, soweit übertragbar, analoge Ausführungsformen und die gleichen Vorteile auf, welche bezüglich des vorgestellten Verfahrens aufgeführt sind.

Gemäß einer Ausführungsform kann die Förderstrecke eine Förderfläche ausbildende Lamellen umfassen, die Antriebseinheit und die Antriebskette können von einem Kettengetriebe umfasst sein und die Antriebskette kann ausgestaltet, die Lamellen zu ziehen.

Der Kraftmesspin kann ausgestaltet sein, die auf ihn wirkenden Kräfte mit hoher Abtastrate kontinuierlich oder nahezu kontinuierlich zu registrieren und an das Hintergrundsystem zu übermitteln. Der Kraftmesspin kann eine Batterie umfassen oder ausgestaltet sein, über Kabel mit Strom versorgt zu werden.

Gemäß einer Ausführungsform kann der Kraftmesspin Mittel zur Erfassung von Zustandsdaten umfassen, beispielsweise eine verbleibende Batteriekapazität und seine Temperatur, und ausgestaltet sein, die erfassten Zustandsdate an das Hintergrundsystem zu übermitteln.

Gemäß einer Ausführungsform kann das System zudem umfassen ein an einem festen Ort des Fördersystems installiertes Gateway zur Übermittlung der registrierten Daten von dem Kraftmesspin zum Hintergrundsystem, wobei das Gateway ausgestaltet ist, bei jeder maximalen Annäherung des Kraftmesspins eine Nullzeit zu setzen.

Ausführungsformen der Erfindung werden nachfolgend anhand der Figuren beispielsweise näher erläutert. Dabei zeigen:
- Figur 1: einen Ausschnitt einer Antriebskette; und
- Figur 2: ein Kraftdiagramm von Kraftmesspins mit und ohne Anomalie.

Die nachstehend detailliert beschriebene Ausführungsform bezieht sich auf ein Gepäckausgabekarussell 2. Die Erfindung ist jedoch nicht auf ein Flughafen- Gepäckkarussell beschränkt, sondern für jede Art von Fördersystemen anwendbar, die eine umlaufende Antriebskette 4 aufweisen. Detektiert werden können sämtliche Anomalien A, die sich in einer Veränderung der Kettenspannung äußern, wobei die Dauer und/oder Stärke der Veränderung der Kettenspannung abhängig ist von der Art der Anomalie A.

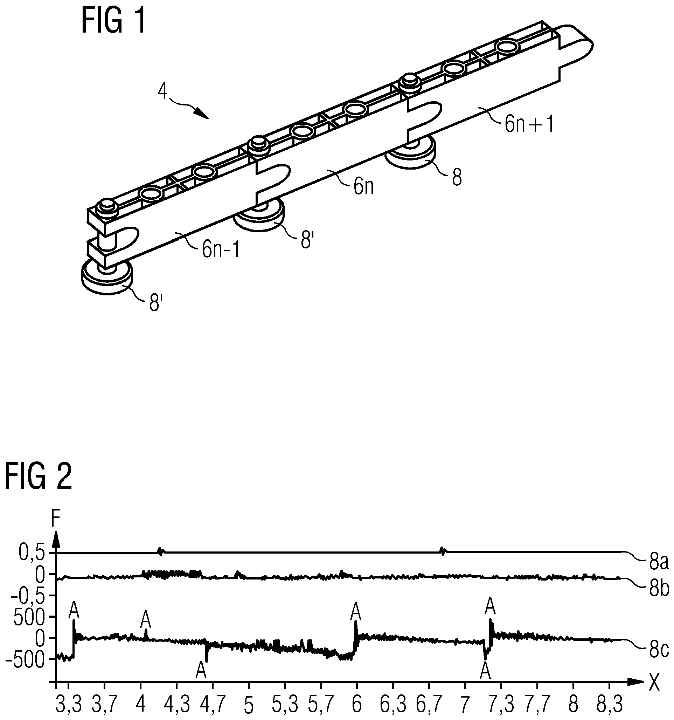

Figur 1 zeigt einen Ausschnitt einer Antriebskette 4 eines Gepäckförderkarussells gemäß einer Ausführungsform der Erfindung. Die einzelnen Kettenglieder 6ₙ₋₁, 6ₙ, 6ₙ₊₁ werden durch Pins 8', 8 zusammengehalten. Bei einer Antriebskette 4 ist mindestens einer der Pins 8' ein Kraftmesspin 8. Der Kraftmesspin 8 misst die Kräfte zwischen zwei Kettengliedern 6ₙ, 6ₙ₊₁ und übermittelt während des Umlaufs der Antriebskette 4 kontaktlos die Kraft, die auf die Antriebskette 4 und somit auf den Kraftmesspin 8 in Bewegungsrichtung wirkt an ein Hintergrundsystem. Da es sich um eine umlaufende Antriebskette 4 handelt, erreicht der Kraftmesspin 8 durch seine Bewegung zyklisch alle Punkte des Gepäckförderkarussells. Etwaige Über- oder Unterspannungen der Antriebskette 4, die ein Anzeichen für zu wartende Anomalien A des Fördersystems 2 sind, werden gemessen und an das Hintergrundsystem übermittelt. Um eine hohe Genauigkeit zu erzielen und/oder um eine instantane Auswertung zu ermöglichen, kann der Kraftmesspin 8 die auf ihn wirkenden Kräfte analog oder mit hoher Abtast- bzw. Samplerate registrieren und somit eine kontinuierliche oder nahezu kontinuierliche Messung ermöglichen. Bei sofortiger Übermittlung an das Hintergrundsystem, das in ein SCADA-System integriert sein kann, kann dieses dann nahezu instantan Anomalien A erkennen und ein Wartungsmitarbeiter auf diese erkannte Anomalie A reagieren. Wartungen können so besser geplant werden, je nach Art der erkannten Anomalie kann auch eine sofortige Betriebsunterbrechung zur Wartung erfolgen, um schlimmere Beschädigungen, die sonst bei fortlaufendem Betrieb auftreten würden, zu verhindern.

Das Hintergrundsystem kann über eine Software die Messwerte für Wartungspersonal visualisieren, so dass geschulte Mitarbeiter zu hohe und zu niedrige Spannungen als Anomalien A erkennen und geeignete Maßnahmen ableiten können. Wenn das Gepäckkarussell mehr als eine Antriebseinheit aufweist kann auf diese Weise die Verteilung der Antriebskräfte beobachtet werden.

Figur 2 zeigt ein Kraftdiagramm F in Abhängigkeit vom Ort x der Messung verschiedener Kraftmesspins 8a, 8b, 8c. Der Kraftmesspin 8c weist eine Anomalie A auf, genauer einen Fehler in einer Antriebseinheit. Eine Antriebseinheit arbeitet fehlerhaft, wodurch die andere Antriebseinheit überlastet. Auch andere Anomalien A (Fehler des Friktionsantriebs, blockierte Rollen, Zustände des Motors einer Antriebseinheit, Fahrbahnstörungen, eingeklemmte Störteile...) können erkannt werden, wobei Störungen unterschiedlicher Art sich in unterschiedlichen Kraftdiagrammen äußern und somit anhand der Ausgestaltung des Kraftdiagramms auf die Art der Anomalie A geschlossen werden kann.

Typischerweise umfasst ein Kraftmesspin 8 ein Drehteil, beispielsweise eine Hohlwelle, und einen innenliegenden Dehnungsstreifen zur Kraftmessung.

Gemäß einer weiteren Ausführungsform können die gemessenen Kräfte automatisiert zu Fehlermeldungen verdichtet werden. Hierzu kann neben der maximal registrierten Kraft F und der minimal registrierten Kraft F auch deren Differenz erkannt werden. Neben dem Auslösen von Wartungshinweisen kann so auch ein Gepäckkarussell durch automatisierte Abschaltungen vor längerfristigen Überlastungen (wie sie beispielsweise bei Verklemmung der Schuppen auftreten) geschützt werden.

Die Abweichungen der Kräfte von den normal auftretenden Kräften werden durch einen statistischen Vergleich mit vorangehenden Registrierungen oder durch einen Vergleich mit einer fixen Größe erkannt werden. Auch ein Vergleich der Kraftdiagramme unterschiedlicher Kraftmesspins 8 und/oder unterschiedlicher Gepäckkarussells wird zur Erkennung von Anomalien A herangezogen. Ein geschulter Wartungsmitarbeiter mit Erfahrung oder ein gut programmiertes und Parametern des Gepäckkarussells versorgtes Hintergrundsystem kann u.U. Anomalien auch anhand des Kraftdiagramms eines einzigen Kraftmesspins 8 erkennen.

Die Übermittlung der Daten von dem Kraftmesspin 8 zum Hintergrundsystem erfolgt gemäß einer Ausführungsform über ein an einem festen Ort des Fördersystems installiertes Gateway, wobei bei jeder maximalen Annäherung des Kraftmesspins 8 eine Nullzeit gesetzt wird. Die vom Gateway empfangenen Daten, also wenigstens das Tripel Identität des Kraftmesspins, die gemessene Kraft und ein Zeit- bzw. Ortsstempel werden an das Hintergrundsystem, beispielsweise an eine Cloud, übermittelt und dort mittels eines Signalverarbeitungsservers analysiert durch
- Vergleich mit vorher empfangenen Tripeln (desselben Kraftmesspins 8 und/oder derselben Messposition);
- statistische Auswertung über die Zeit. Derselbe Signalverarbeitungsserver kann die Daten unterschiedlicher Gepäckkarussells analysieren und - zumindest bei vergleichbar aufgebaute Gepäckkarussells - miteinander vergleichen. Wenn bei dieser Analyse eine signifikante Abweichung festgestellt wird, kann eine Meldung an den Betreiber abgesetzt werden mit Angabe der Anlage und dem Ort der detektierten Anomalie, um Wartungspersonal aufbieten zu können. Im Hintergrundsystem sind weitere Anlagenparameter gespeichert.

Die Kraftmesssensoren 8 können vorzugsweise zusätzlich zu dem Datentripel weitere Zustandsdaten eines jeden Kraftmesspins 8 übertragen, beispielsweise eine verbleibende Batteriekapazität und seine Temperatur, übermitteln. Mit diesen zusätzlichen Daten kann im Hintergrundsystem durch den Signalverarbeitungsserver somit auch der Zustand der Kraftmesspins 8 selber überwacht werden. Dadurch wird die Verfügbarkeit des vorgeschlagenen Verfahrens und Systems zur Erkennung von Anomalien A beim Betrieb eines Fördersystems noch einmal und ohne nennenswerten zusätzlichen Aufwand verbessert.

Durch die dynamische Erfassung werden Probleme schneller erkannt und der Verschleiß gesenkt. Wartungsintervalle können geplant und ggf. verlängert werden. Nur durch die dynamische Messung können Probleme, die nur im laufenden Betrieb auftreten, erkannt werden. Dies umfasst eine Überladung als auch die Blockade eines Rades. Bisher wurden der zusätzliche Verschleiß und das Risiko eines Kettenrisses toleriert. Eine automatisierte Auswertung der Messergebnisse erlaubt den Wartungstechnikern leicht zielgerichtete Wartungsmaßnahmen abzuleiten.

### Bezugszeichenliste

- 4: Antriebskette
- 6: Kettenglied
- 8: Kraftmesspin
- 8': Pin
- A: Anomalie

## Patentansprüche

1. Verfahren zum Erkennen von Anomalien (A) beim Betrieb eines Fördersystems zum Transport von Stückgütern, beispielsweise Gepäckstücken, umfassend eine umlaufende Antriebskette (4), eine Antriebseinheit und eine Förderstrecke, wobei die Antriebskette (4) zur Kraft- und Bewegungsübertragung von einer Antriebseinheit auf eine Förderstrecke dient und die Antriebskette Kettenglieder (6) und diese verbindende Pins (8') umfasst, wobei mindestens einer der Pins (8') ein Kraftmesspin (8) ist, ausgestaltet zum kontaktlosen Übertragen der auf ihn wirkenden Kräfte an ein Hintergrundsystem ; **gekennzeichnet durch** die Verfahrensschritte:
a) bei einem Bewegen der Antriebskette (4) registriert der Kraftmesspin (8) die auf ihn wirkenden Kräfte;
b) die registrierten Kräfte werden von dem Kraftmesspin (8) zusammen mit einem Zeitstempel und/oder einem Ortsstempel und einer Identität des Kraftmesspins (8) drahtlos an das Hintergrundsystem übermittelt;
c) im Hintergrundsystem werden die im Verfahrensschritt b) übermittelten Daten einer Analyse unterzogen und bei Abweichungen als Anomalie (A) erkannt und mit einer Meldung signalisiert.

2. Verfahren nach Anspruch 1, **dadurch gekennzeichnet, dass** die Abweichungen durch einen statistischen Vergleich mit vorangehenden Registrierungen oder durch einen Vergleich mit einer fixen Größe erkannt werden.

3. Verfahren nach einem der Ansprüche 1 oder 2, **dadurch gekennzeichnet, dass**
der Kraftmesspin die auf ihn wirkenden Kräfte analog oder mit hoher Abtastrate kontinuierlich oder nahezu kontinuierlich registriert.

4. Verfahren nach einem der Ansprüche 1 bis 3, **dadurch gekennzeichnet, dass**
der Kraftmesspin (8) batteriebetrieben ist oder über eine Verkabelung mit Strom versorgt wird.

5. Verfahren nach einem der Ansprüche 1 bis 4, **dadurch gekennzeichnet, dass**
der Kraftmesspin (8) eine Welle umfasst, die eine Wheatstone-Brücke zur Messung einer Scherverformung aufweist.

6. Verfahren nach einem der Ansprüche 1 bis 5, **dadurch gekennzeichnet, dass**
zusätzlich zu den registrierten Kräften Zustandsdaten eines jeden Kraftmesspins (8), beispielsweise eine verbleibende Batteriekapazität und seine Temperatur, übermittelt werden.

7. Verfahren nach Anspruch 6, **dadurch gekennzeichnet, dass** bei Unterschreiten einer festgelegten Batteriekapazität oder bei Überschreiten einer bestimmten Temperatur ebenfalls eine Meldung gemäß Anspruch 1, Verfahrensschritt c) abgesetzt wird.

8. Verfahren nach einem der Ansprüche 1 bis 7, **dadurch gekennzeichnet, dass**
die Übermittlung der Daten von dem Kraftmesspin (8) zum Hintergrundsystem über ein Gateway erfolgt, wobei das Gateway an einem festen Ort des Fördersystems installiert ist und bei jeder maximalen Annäherung des Kraftmesspins (8) eine Nullzeit gesetzt wird.

9. System zum Erkennen von Anomalien (A) beim Betrieb eines Fördersystems zum Transport von Stückgütern, beispielsweise Gepäckstücken, umfassend eine umlaufende Antriebskette (4), eine Antriebseinheit und eine Förderstrecke, wobei die Antriebskette (4) zur Kraft- und Bewegungsübertragung von einer Antriebseinheit auf eine Förderstrecke dient und die Antriebskette (4) Kettenglieder (6) und diese verbindende Pins (8') umfasst, wobei mindestens einer der Pins (8') ein Kraftmesspin (8) ist, ausgestaltet zum kontaktlosen Übertragen der auf ihn wirkenden Kräfte an ein Hintergrundsystem; umfassend Mittel, insbesondere ein Hintergrundsystem, zur Durchführung des Verfahrens von Anspruch 1 bis 8, insbesondere der Verfahrensschritte a) bis c) von Anspruch 1.

10. System nach Anspruch 9, **dadurch gekennzeichnet, dass** die Förderstrecke eine Förderfläche ausbildende Lamellen umfasst, die Antriebseinheit und die Antriebskette (4) von einem Kettengetriebe umfasst sind und die Antriebskette (4) ausgestaltet ist, die Lamellen zu ziehen.

11. System nach einem der Ansprüche 9 bis 10, **dadurch gekennzeichnet, dass**
der Kraftmesspin (8) ausgestaltet ist, die auf ihn wirkenden Kräfte mit hoher Abtastrate kontinuierlich oder nahezu kontinuierlich zu registrieren und an das Hintergrundsystem zu übermitteln.

12. System nach einem der Ansprüche 9 bis 11, **dadurch gekennzeichnet, dass**
der Kraftmesspin (8) eine Batterie umfasst oder ausgestaltet ist, über Kabel mit Strom versorgt zu werden.

13. System nach einem der Ansprüche 9 bis 12, **dadurch gekennzeichnet, dass**
der Kraftmesspin (8) eine Welle umfasst, die eine Wheatstone-Brücke zur Messung einer Scherverformung aufweist.

14. System nach einem der Ansprüche 9 bis 13, **dadurch gekennzeichnet, dass**
der Kraftmesspin (8) Mittel zur Erfassung von Zustandsdaten umfasst, beispielsweise eine verbleibende Batteriekapazität und seine Temperatur, und ausgestaltet ist, die erfassten Zustandsdate an das Hintergrundsystem zu übermitteln.

15. System nach einem der Ansprüche 9 bis 14, zudem umfassend ein an einem festen Ort des Fördersystems installiertes Gateway zur Übermittlung der registrierten Daten von dem Kraftmesspin (8) zum Hintergrundsystem, wobei das Gateway ausgestaltet ist, bei jeder maximalen Annäherung des Kraftmesspins (8) eine Nullzeit zu setzen.
